(19) Europäisches Patentamt
European Patent Office
Office européen des brevets

(11) EP 1 505 713 B1

(12) EUROPEAN PATENT SPECIFICATION

(45) Date of publication and mention
of the grant of the patent:
**13.02.2019 Bulletin 2019/07**

(51) Int Cl.:
*H02K 15/16* (2006.01)

(21) Application number: **04253788.6**

(22) Date of filing: **24.06.2004**

(54) **A method of balancing a rotor and a balancing machine**

Verfahren zum auswuchten eines Rotors und Auswuchtmaschine

Procédé d'équilibrage d'un rotor et machine d'équilibrage

(84) Designated Contracting States:
**AT BE BG CH CY CZ DE DK EE ES FI FR GB GR
HU IE IT LI LU MC NL PL PT RO SE SI SK TR**

(30) Priority: **24.07.2003 GB 0317344**

(43) Date of publication of application:
**09.02.2005 Bulletin 2005/06**

(73) Proprietor: **Cummins Generator Technologies
Limited
Stamford
Lincolnshire PE9 2NB (GB)**

(72) Inventors:
• **Dowdall, Jeremy Owen
Oakham, Rutland LE15 6NT (GB)**
• **Maddison, Christopher Paul
Lincolnshire PE6 8EN (GB)**
• **Allen, Stephen Frederick
Stamford,
Lincolnshire PE9 1DJ (GB)**

(74) Representative: **Williams, Michael Ian et al
Cleveland
10 Fetter Lane
London EC4A 1BR (GB)**

(56) References cited:
**DE-A- 10 032 600     DE-A- 19 859 664
US-B1- 6 580 186**

**Description**

This invention relates to a method of balancing a rotor for an electrical machine. This invention also relates to a balancing machine for carrying out such a method.

Rotors for electrical machines rotate at rotational speeds of, typically, several hundred revolutions per minute. At such speeds, it is important for the mass of the rotor to be evenly distributed about the axis of rotation. An uneven distribution of mass would result in oscillating forces acting on and through the rotor. Such forces produce noise and vibration, and where the rotor, or an axle thereof, is mounted on bearings, this reduces the useful life of the bearings and may also impede the efficient operation of any prime mover to which the rotor is coupled for receiving rotary power. Where a rotor has an uneven distribution of mass about its axis of rotation it is often referred to as being "out of balance" or "imbalanced".

It is possible to correct an out of balance rotor with the aid of a balancing machine. To do this, the rotor is mounted in structure of the balancing machine and a balancing operation is performed. This involves the rotor being rotated by the machine and, during this rotation, the machine detecting any out of balance force. The balancing machine then returns information indicative of the magnitude and position on the rotor of a mass that, if so positioned, would cancel out the out of balance force, such that the rotor becomes balanced.

However, using this technique, it is not possible to correctly balance a rotor that is already assembled into an electrical machine. If such a rotor, together with the remainder of the electrical machine in which it is assembled, were positioned in the balancing machine and a balancing operation performed by operating the balancing machine in its usual manner, magnetic interaction between the rotor and the remainder of the electrical machine would contribute to a perceived imbalance by the balancing machine that is constituted by (a) a magnetic imbalance due to magnetic interaction between the rotor and the remainder of the electrical machine, and (b) by a mechanical imbalance due to the aforementioned uneven distribution of rotor mass about its axis of rotation. Any information returned by the balancing machine would therefore be for correcting this perceived imbalance, i.e. both the mechanical imbalance and the magnetic imbalance. As it is only desirable to cancel out the mechanical imbalance, proceeding on the basis of the information returned by the balancing machine would be undesirable.

Thus, any balancing of the rotor has, hitherto, been accomplished with the rotor removed from the remainder of the electrical machine. Unfortunately, however, re-fitting the rotor to the electrical machine after balancing usually necessitates some disassembly of the rotor. This can disturb the balancing of the rotor and re-introduce some imbalance.

Thus, there is a need for a method and/or apparatus that provides for balancing a rotor which is assembled in an electrical machine of which it forms a part.

It is an object of this invention to address this need.

US 6,580,186 discloses a method of balancing a rotating polygon mirror in a high speed optical scanning apparatus. A first balance correction is performed at a relatively low speed. Once the balance has been approximately corrected, a second balance correction is carried out at high speed.

DE 100 32 600 discloses a method of balancing a rotor. The method involves measuring the primary imbalance and running a test to calculate coefficients of influence for determination of balancing masses. After balancing the rotor, a check run is performed to determine the remaining imbalance. When an allowable remaining imbalance value is exceeded, new coefficients of influence are calculated from the remaining imbalance and the balancing masses, and new balancing masses are then calculated in order to balance the remaining imbalance.

DE 198 59 664 discloses an iterative method of balancing a rotor using a balancing machine.

According to this invention, there is provided a method of balancing a permanent magnet rotor for an electrical machine as defined in claim 1.

Preferred features of the invention are recited in the dependent claims.

The claimed method is advantageous in that the rotor may undergo balancing to correct any mechanical imbalance only, whilst assembled into the remainder of the electrical machine of which it forms part. This removes the need for balancing the rotor when removed from the machine and then disassembling the rotor after such balancing for re-assembly into the machine, which, as stated above can re-introduce mechanical imbalance.

Specific embodiments of this invention are now described by way of example only with reference to the accompanying drawings, in which:

Figure 1 is a schematic representation of a balancing machine;

Figure 2 is a vector diagram showing two force vectors, each needed to cancel out a respective perceived imbalance at a respective speed, the diagram for use in calculating the magnitude of the difference between the two vectors;

Figure 3 is another vector diagram showing the two force vectors, for use in calculating the direction of the difference between the two vectors; and

Figure 4 is a further vector diagram showing the two force vectors, together with vectors illustrative of magnetic imbalance and mechanical imbalance that make up the perceived imbalance.

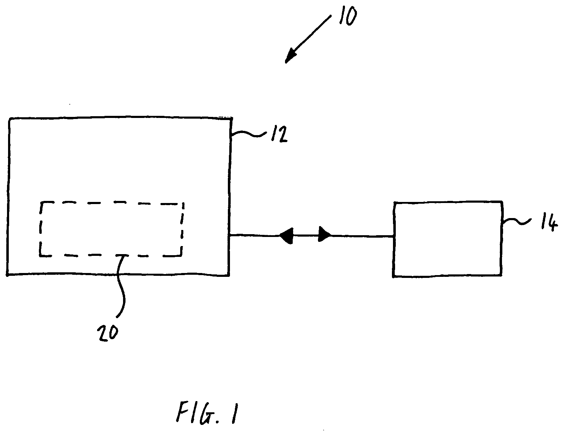

Figure 1 shows a balancing machine 10. The balancing machine 10 is of the type that is suitable for receiving an electrical machine, shown as hidden detail 20, and for performing a balancing operation on a rotor (not shown) of that electrical machine 20. The balancing machine 10 is similar to a known balancing machine, such as that manufactured by the Schenck company and designated EJL 0035 and that includes a balancing station 12 under the control of processing means such as a computer 14. It is envisaged that the electrical machine 20 is a permanent magnet axial flux alternator, having two co-axial rotor discs with a toroidal stator sandwiched therebetween. In carrying out this embodiment, the electrical machine 20 is placed in the balancing station 12 of the balancing machine 10 such that balancing operations can be performed on the rotor. Firstly, a first balancing operation is performed at a first speed. This involves the rotor, whilst still mounted in the electrical machine, being rotated at the first speed. The balancing machine 10 detects a perceived imbalance in the rotor that is due to both mechanical imbalance of the rotor resulting from an uneven distribution of mass of the rotor about its axis of rotation, and due to magnetic imbalance of the rotor resulting from magnetic interaction between the permanent magnets on the rotor and ferrous material of the stator. Upon detecting this perceived imbalance, the balancing machine returns to a user first information indicative of the magnitude and direction of a first force needed to balance the perceived imbalance detected at the first speed.

A second balancing operation is then performed at a second, higher, speed. Again, the balancing machine 10 detects a perceived imbalance in the rotor made up of a mechanical imbalance and a magnetic imbalance. The machine 10 then returns to the user second information indicative of the magnitude and direction of a second force needed to balance the perceived imbalance detected at the second speed.

In the following calculations, S1 is a vector that represents the magnitude and direction of the first force necessary to counteract the perceived imbalance at the first speed; and S2 is a vector that represents the second force necessary to counteract the perceived imbalance at the second speed. Unless otherwise stated, any quantity herein that is represented by a capital letter is a vector quantity.

It will be appreciated that, although any imbalance force due to a mechanical imbalance varies with the square of the rotational speed of the rotor (given that $f = mr\omega^2$, where f is magnitude of an imbalance force, m is an imbalanced mass, r is the radial position of that mass and $\omega$ is the angular velocity), an imbalance force due to magnetic effects remains constant with rotational speed. Thus, at each speed, the perceived vector imbalance force is the vector sum of the vector imbalance force due to magnetic imbalance (which is constant) and the vector imbalance force due to mechanical imbalance (which varies with the square of the rotational speed). It will therefore be appreciated that each balancing operation above leads to a respective equation as set out below.

$$S1 = M + F1 \qquad \dots 1$$

$$S2 = M + F2 \qquad \dots 2$$

In these equations, M is the vector of the correction force needed to counter the magnetic imbalance; F1 is the vector of the correction force needed to counter the mechanical imbalance at the first speed; and F2 is the vector of the correction force needed to counter the mechanical imbalance at the second speed. Solving these simultaneously for M leads to the following.

$$F1 - S1 = F2 - S2 \qquad \dots 3$$

Given also that the ratio of F1 to F2 will be the same as the ratio of the square of the first speed $\omega 1$ to the square of the second speed $\omega 2$, it is possible to arrive at the following.

$$M = \frac{S1 - S2}{1 - (\omega_1^2/\omega_2^2)} \qquad \dots 4$$

or

$$M = \frac{S1 - S2}{(\omega_2^2/\omega_1^2) - 1} \qquad \dots 5$$

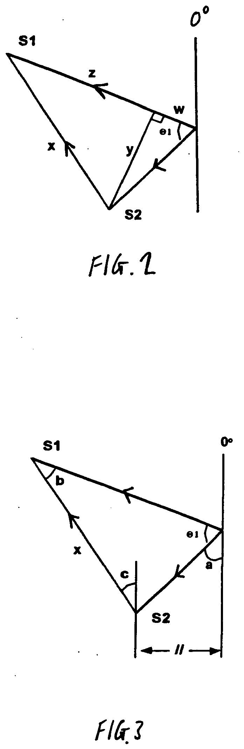

Figure 2 shows a vector diagram, with vectors S1 and S2 drawn thereon. Given that S1 and S2 are known, it is possible to calculate vector X, where X = S1-S2, using standard trigonometry. An example of an appropriate calculation, which is with reference to Figures 2 and 3, is given below.

With reference to Figure 2:

$$y = s_2 \sin \theta 1 \qquad \dots 6$$

where $\theta 1$ is the angle between S1 and S2, and $s_2$ is the magnitude of S2

$$w = \sqrt{(s_2^2 - y^2)} \qquad \dots 7$$

$$z = s_1 - w \qquad \dots 8$$

$$x = \sqrt{(z^2 + y^2)} \qquad \dots 9$$

With reference to Figure 3:

$$a = \theta S2 - 180 \qquad \dots 10$$

$$b = \arctan (y/z) \qquad \dots 11$$

$$c = [180 - (\theta1 + b)] - a \qquad \dots 12$$

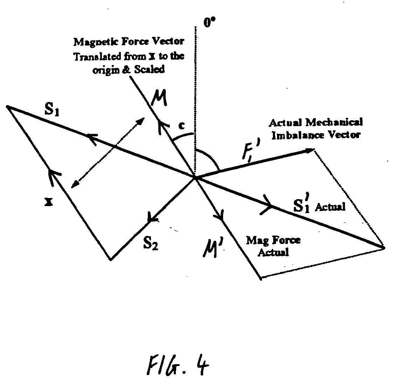

Thus the magnitude x and direction c of X, the vector difference between S1 and S2, are arrived at. Having calculated X, it is then possible to solve equations 4 and/or 5 above to work out M, the vector of the correction force that would counteract the imbalance of the rotor due to magnetic effects. M is plotted on Figure 4.

Having calculated M, it is then possible to calculate F1 and F2, the respective force vectors that are necessary to cancel out the mechanical imbalance at each of the first speed and the second speeds. From these quantities, it is then possible to calculate the mass, and the position of such a mass, that must be applied to the rotor in order to mechanically balance the rotor.

Figure 4 also shows the force vector that causes magnetic imbalance, M', the force vector that causes the mechanical imbalance at the first speed F1', and the resultant of these two quantities: the force vector that causes the total imbalance S1' that is perceived by the balancing machine.

It is envisaged that the balancing machine 10 may be modified such that it is provided with calculating means arranged and operable to carry out the calculations described above and thereby to provide a user with information indicative of the mass, and the position of such a mass, that must be applied to the rotor in order to mechanically balance the rotor.

**Claims**

1. A method of balancing a permanent magnet rotor for an electrical machine, **characterised in that** the method is carried out whilst the rotor is assembled in the electrical machine of which it forms a part and the method comprises the steps of:

   a) performing a first balancing operation at a first rotational speed to detect a perceived imbalance in the rotor made up of a mechanical imbalance and a magnetic imbalance, and to ascertain first information (S1) indicative of the magnitude and direction of a first force needed to balance the perceived imbalance detected at the first speed;

   b) performing a second balancing operation at a second rotational speed to detect a perceived imbalance in the rotor made up of a mechanical imbalance and a magnetic imbalance, and to ascertain second information (S2) indicative of the magnitude and direction of a second force needed to balance the perceived imbalance detected at the second speed,

   wherein, at each speed, the perceived vector imbalance force is the vector sum of the vector imbalance force due to magnetic imbalance and the vector imbalance force due to mechanical imbalance;

   c) operating on the first information (S1) and the second information (S2) to arrive at balancing information indicative of the mechanical imbalance of the rotor and the magnetic imbalance of the rotor, thereby allowing the mechanical imbalance only to be corrected,

   wherein the operating step comprises calculating from the first and second information (S1, S2) and the first and second speeds the vector of the correction force (M) that would counteract the imbalance of the rotor due to magnetic effects, and calculating, from the vector of the correction force (M) and the first and second information (S1, S2), the respective force vectors (F1, F2) that are necessary to cancel out the mechanical imbalance at each of the first speed and the second speeds; and

   (d) calculating, from the force vectors (F1, F2), the mass and the position of such a mass that must be applied to the rotor to mechanically balance the rotor.

2. A method according to claim 1 and including the further step of correcting the mechanical imbalance of the rotor.

3. A method according to claim 2, wherein the step of correcting the mechanical imbalance includes the fitting of at least one mass to the rotor.

4. A method according to any preceding claims, wherein in step (a) includes ascertaining information indicative of the magnitude and position of a mass or a force that, if positioned or applied to the rotor at that position, would substantially cancel out a perceived imbalance of the rotor at the first speed.

5. A method according to any preceding claim, wherein step (b) includes ascertaining information indicative of the magnitude and position of a mass or a force that, if positioned or applied to the rotor at that position, would substantially cancel out a perceived imbalance of the rotor at the second speed.

6. A method according to any preceding claim, wherein step (c) includes the step of subtracting the first information from the second, or the second information from the first, to arrive at difference information indicative of the difference between the magnitude and direction of the force needed to counteract the mechanical imbalance at the first speed and the magnitude and direction of the force needed to counteract the mechanical imbalance at the second speed, without any element of the magnetic imbalance therein.

7. A method according to claim 6, wherein step (c) includes multiplying or dividing the difference information by a function of the ratio of the square of the first speed to the square of the second speed to arrive at information indicative of the mechanical imbalance only, or the magnetic imbalance only, at the first speed, this information preferably being the magnitude and direction of a force bringing about, or necessary to substantially cancel, that imbalance at that speed.

8. A method according to claims 6 or claim 7, wherein step (c) includes multiplying or dividing the difference information by a function of the ration of the square of the first speed to the square of the second speed to arrive at information indicative of the mechanical imbalance only, of the magnetic imbalance only, at the second speed, this information preferably being the magnitude and direction of a force bringing about, or necessary to substantially cancel, that imbalance at that speed.

9. A method according to any one of claims 6 to 7, wherein the difference information is divided by one minus the quotient of the square of the first speed and the square of the second speed to give the magnitude and direction of the force necessary to cancel out the mechanical imbalance at the first speed.

10. A method according to any one of claims 6 to 9, wherein the difference information is divided by one minus the quotient of the square of the second speed and the square of the first speed to give the magnitude and direction of the force necessary to cancel out the mechanical imbalance at the second speed.

**Patentansprüche**

1. Verfahren zum Auswuchten eines Permanentmagnetrotors für eine elektrische Maschine, **dadurch gekennzeichnet, dass** das Verfahren ausgeführt wird, während der Rotor in der elektrischen Maschine, von der er einen Teil bildet, montiert ist, und das Verfahren folgende Schritte umfasst:

    a) Ausführen eines ersten Auswuchtvorgangs bei einer ersten Drehzahl, um eine wahrgenommene Unwucht in dem Rotor zu erkennen, die aus einer mechanischen Unwucht und einer magnetischen Unwucht zusammengesetzt ist, und um den Betrag und die Richtung einer ersten, zum Auswuchten der bei der ersten Drehzahl erkannten wahrgenommenen Unwucht benötigten Kraft angebende erste Informationen (S1) zu ermitteln;

    b) Ausführen eines zweiten Auswuchtvorgangs bei einer zweiten Drehgeschwindigkeit, um eine wahrgenommene Unwucht in dem Rotor zu erkennen, die aus einer mechanischen Unwucht und einer magnetischen Unwucht zusammengesetzt ist, und um den Betrag und die Richtung einer zweiten, zum Auswuchten der bei der zweiten Drehzahl erkannten wahrgenommenen Unwucht benötigten Kraft angebende zweite Informationen (S2) zu ermitteln;

    wobei es sich bei jeder Drehzahl bei dem wahrgenommenen Unwuchtkraftvektor um die Vektorsumme des Unwuchtkraftvektors infolge magnetischer Unwucht und des Unwuchtkraftvektors infolge mechanischer Unwucht handelt;

    c) Einwirken auf die ersten Informationen (S1) und die zweiten Informationen (S2), um Auswuchtinformationen zu erhalten, die die mechanische Unwucht des Rotors und die magnetische Unwucht des Rotors angeben, wodurch ermöglicht wird, dass nur die mechanische Unwucht korrigiert wird,

    wobei der Einwirkungsschritt Folgendes umfasst: Berechnen, aus den ersten und den zweiten Informationen (S1, S2) und der ersten und der zweiten Drehzahl, des Vektors der Korrekturkraft (M), die der Unwucht des Rotors infolge magnetischer Effekte entgegenwirken würde, und Berechnen, aus dem Vektor der Korrekturkraft (M) und den ersten und den zweiten Informationen (S1, S2), der jeweiligen Kraftvektoren (F1, F2), die notwendig sind, um die mechanische Unwucht bei der ersten Drehzahl und bei der zweiten Drehzahl aufzuheben; und

    (d) Berechnen, aus den Kraftvektoren (F1, F2), der Masse und der Position einer derartigen Masse, die auf den Rotor aufgebracht werden muss, um den Rotor mechanisch auszuwuchten.

2. Verfahren nach Anspruch 1 und umfassend den weiteren Schritt des Korrigierens der mechanischen Unwucht des Rotors.

3. Verfahren nach Anspruch 2, wobei der Schritt des Korrigierens der mechanischen Unwucht das Anbringen mindestens einer Masse an dem Rotor umfasst.

**4.** Verfahren nach einem der vorangehenden Ansprüche, wobei Schritt (a) das Ermitteln von Informationen umfasst, die den Betrag und die Position einer Masse oder Kraft angeben, die, wenn sie an dieser Position an dem Rotor positioniert oder darauf ausgeübt wird, eine wahrgenommene Unwucht des Rotors bei der ersten Drehzahl im Wesentlichen aufheben würde.

**5.** Verfahren nach einem der vorangehenden Ansprüche, wobei Schritt (b) das Ermitteln von Informationen umfasst, die den Betrag und die Position einer Masse oder Kraft angeben, die, wenn sie an dieser Position an dem Rotor positioniert oder darauf ausgeübt wird, eine wahrgenommene Unwucht des Rotors bei der zweiten Drehzahl im Wesentlichen aufheben würde.

**6.** Verfahren nach einem der vorangehenden Ansprüche, wobei Schritt (c) den Schritt des Abziehens der ersten Informationen von den zweiten oder der zweiten Informationen von den ersten umfasst, um Differenzinformationen zu erhalten, die Folgendes angeben: die Differenz zwischen dem Betrag und der Richtung der Kraft, die benötigt wird, um der mechanischen Unwucht bei der ersten Drehzahl entgegenzuwirken, und dem Betrag und der Richtung der Kraft, die benötigt wird, um der mechanischen Unwucht bei der zweiten Drehzahl, ohne irgendein Element der magnetischen Unwucht darin, entgegenzuwirken.

**7.** Verfahren nach Anspruch 6, wobei Schritt (c) das Multiplizieren oder Teilen der Differenzinformationen mit einer bzw. durch eine Funktion des Verhältnisses des Quadrats der ersten Drehzahl zu dem Quadrat der zweiten Drehzahl umfasst, um Informationen zu erhalten, die nur die mechanische Unwucht oder nur die magnetische Unwucht bei der ersten Drehzahl angeben, wobei es sich bei diesen Informationen vorzugsweise um den Betrag und die Richtung einer Kraft handelt, die die Unwucht bei dieser Drehzahl hervorruft oder notwendig ist, um diese im Wesentlichen aufzuheben.

**8.** Verfahren nach Anspruch 6 oder Anspruch 7, wobei Schritt (c) das Multiplizieren oder Teilen der Differenzinformationen mit einer bzw. durch eine Funktion des Verhältnisses des Quadrats der ersten Drehzahl zu dem Quadrat der zweiten Drehzahl umfasst, um Informationen zu erhalten, die nur die mechanische Unwucht oder nur die magnetische Unwucht bei der zweiten Drehzahl angeben, wobei es sich bei diesen Informationen vorzugsweise um den Betrag und die Richtung einer Kraft handelt, die die Unwucht bei dieser Drehzahl hervorruft oder notwendig ist, um diese im Wesentlichen aufzuheben.

**9.** Verfahren nach einem der Ansprüche 6 bis 7, wobei die Differenzinformationen durch eins minus den Quotienten des Quadrats der ersten Drehzahl und des Quadrats der zweiten Drehzahl geteilt werden, um den Betrag und die Richtung der Kraft zu liefern, die notwendig ist, um die mechanische Unwucht bei der ersten Drehzahl aufzuheben.

**10.** Verfahren nach einem der Ansprüche 6 bis 9, wobei die Differenzinformationen durch eins minus den Quotienten des Quadrats der zweiten Drehzahl und des Quadrats der ersten Drehzahl geteilt werden, um den Betrag und die Richtung der Kraft zu liefern, die notwendig ist, um die mechanische Unwucht bei der zweiten Drehzahl aufzuheben.

**Revendications**

**1.** Procédé d'équilibrage d'un rotor à aimant permanent d'une machine électrique, **caractérisé en ce que** le procédé est exécuté pendant que le rotor est assemblé dans la machine électrique dont il fait partie et le procédé comprend les étapes suivantes :

a) l'exécution d'une première opération d'équilibrage à une première vitesse de rotation pour détecter un déséquilibre perçu dans le rotor composé d'un déséquilibre mécanique et d'un déséquilibre magnétique, et déterminer des premières informations (S1) indicatives de la grandeur et la direction d'une première force nécessaire pour équilibrer le déséquilibre perçu détecté à la première vitesse ;

b) l'exécution d'une seconde opération d'équilibrage à une seconde vitesse de rotation pour détecter un déséquilibre perçu dans le rotor composé d'un déséquilibre mécanique et d'un déséquilibre magnétique, et déterminer des secondes informations (S2) indicatives de la grandeur et la direction d'une seconde force nécessaire pour équilibrer le déséquilibre perçu détecté à la seconde vitesse,
dans lequel, à chaque vitesse, la force de déséquilibre vectorielle perçue est la somme vectorielle de la force de déséquilibre vectorielle due à un déséquilibre magnétique et de la force de déséquilibre vectorielle due à un déséquilibre mécanique ;
c) la manipulation des premières informations (S1) et des secondes informations (S2) pour arriver à des informations d'équilibrage indicatives du déséquilibre mécanique du rotor et du déséquilibre magnétique du rotor, ne permettant que la correction du déséquilibre mécanique,
dans lequel l'étape de manipulation comprend le calcul à partir des premières et secondes informations (S1, S2) et des première et seconde vitesses du vecteur de la force de correction (M) qui contrebalancerait le déséquilibre du rotor dû à des effets magnétiques, et le calcul, à partir du vecteur de la force de correction (M) et des premières et secondes informations (S1, S2), des vecteurs de force respectifs (F1, F2) qui sont nécessaires pour annuler le déséquilibre mécanique à chacune de la première vitesse et de la seconde vitesse ; et

(d) le calcul, à partir des vecteurs de force (F1, F2), de la masse et de la position d'une telle masse qui doivent être appliquées au rotor pour équilibrer mécaniquement le rotor.

**2.** Procédé selon la revendication 1 et comportant l'étape supplémentaire de correction du déséquilibre mécanique du rotor.

**3.** Procédé selon la revendication 2, dans lequel l'étape de correction du déséquilibre mécanique comporte l'ajustement d'au moins une masse au rotor.

**4.** Procédé selon l'une quelconque des revendications précédentes, dans lequel l'étape (a) comporte la détermination d'informations indicatives de la grandeur et de la position d'une masse ou d'une force qui, si elle était placée sur le rotor ou appliquée à celui-ci à cette position, annulerait sensiblement un déséquilibre perçu du rotor à la première vitesse.

**5.** Procédé selon l'une quelconque des revendications précédentes, dans lequel l'étape (b) comporte la détermination d'informations indicatives de la grandeur et de la position d'une masse ou d'une force qui, si elle était placée sur le rotor ou appliquée à celui-ci à cette position, annulerait sensiblement un déséquilibre perçu du rotor à la seconde vitesse.

**6.** Procédé selon l'une quelconque des revendications précédentes, dans lequel l'étape (c) comporte l'étape de soustraction des premières informations des secondes informations, ou des secondes information des premières informations, pour arriver à des informations de différence indicatives de la différence entre la grandeur et la direction de la force nécessaire pour contrebalancer le déséquilibre mécanique à la première vitesse et la grandeur et la direction de la force nécessaire pour contrebalancer le déséquilibre mécanique à la seconde vitesse, sans aucun élément du déséquilibre magnétique dans celles-ci.

**7.** Procédé selon la revendication 6, dans lequel l'étape (c) comporte la multiplication ou la division des informations de différence par une fonction du rapport du carré de la première vitesse sur le carré de la seconde vitesse pour arriver à des informations indicatives du déséquilibre mécanique uniquement, ou du déséquilibre magnétique uniquement, à la première vitesse, ces informations étant de préférence la grandeur et la direction d'une force engendrant, ou nécessaire pour sensiblement annuler, ce déséquilibre à cette vitesse.

**8.** Procédé selon la revendications 6 ou la revendication 7, dans lequel l'étape (c) comporte la multiplication ou la division des informations de différence par une fonction du rapport du carré de la première vitesse sur le carré de la seconde vitesse pour arriver à des informations indicatives du déséquilibre mécanique uniquement, ou du déséquilibre magnétique uniquement, à la seconde vitesse, ces informations étant de préférence la grandeur et la direction d'une force engendrant, ou nécessaire pour sensiblement annuler, ce déséquilibre à cette vitesse.

**9.** Procédé selon l'une quelconque des revendications 6 à 7, dans lequel les informations de différence sont divisées par un moins le quotient du carré de la première vitesse et du carré de la seconde vitesse pour donner la grandeur et la direction de la force nécessaire pour annuler le déséquilibre mécanique à la première vitesse.

**10.** Procédé selon l'une quelconque des revendications 6 à 9, dans lequel les informations de différence sont divisées par un moins le quotient du carré de la seconde vitesse et du carré de la première vitesse pour donner la grandeur et la direction de la force nécessaire pour annuler le déséquilibre mécanique à la seconde vitesse.

FIG. 1

FIG. 2

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6580186 B
- DE 10032600

- DE 19859664